# EUROPEAN PATENT SPECIFICATION

(11) **EP 1 476 677 B1**
(45) Date of publication and mention of the grant of the patent: **10.10.2007**
(21) Application number: 03702984.0
(22) Date of filing: 21.02.2003
(51) Int. Cl.: F16G 13/18, F16H 19/00

(54) **AN ACTUATOR**
ANTRIEB
ACTIONNEUR

(30) Priority: 21.02.2002 IE 20020132
(43) Date of publication of application: 17.11.2004
(73) Proprietor: Betson, Simon, Saggart, County Dublin (IE); Smyth, Raymond, Harolds Cross, Dublin 6W (IE); Smyth, Laurence, Mountbellew, Co. Galway (IE)
(72) Inventor: Betson, Simon, Saggart, County Dublin (IE); Smyth, Raymond, Harolds Cross, Dublin 6W (IE); Smyth, Laurence, Mountbellew, Co. Galway (IE)
(74) Representative: Lamb, Martin John Carstairs
(86) International application number: PCT/IE2003/000027
(87) International publication number: WO 2003/071158

(56) References cited:
- FR-A- 2 826 422
- US-A- 4 317 505
- US-A- 4 726 247
- US-A- 5 355 643
- US-B1- 6 322 472

## Description

This invention relates to an actuator.

US4726247 discloses an actuator having a worm gear which drives a pair of flexible parts into a guide member where they are united to form a rigid transmission member. The parts have interlocking teeth which cooperate with each other to transmit stresses in compression and tension along the transmission member.

The present invention provides an actuator comprising a series of elements each rotatable relative to the next, a housing accommodating at least part of the series of elements with one end of the series projecting freely beyond an exit of the housing, the elements being guided to follow a non-linear path to the exit, drive means for driving the series of elements relative to the housing to vary the total length of elements projecting beyond the exit, and means for maintaining the projecting elements in linear alignment in a substantially rigid, column, characterised in that the elements are hollow and the drive means includes at least one gear wheel located inside the elements as they pass through the housing and which drivingly engages an inside surface of the elements, the elements having an opening on one side which allows passage of a support means for the gear wheel.

The present invention further provides a device for moving a load comprising a base portion and a load bearing portion and means for moving the load bearing portion, characterised in that the means for moving the load bearing portion comprises an actuator according to the present invention.

Preferred and optional features of the actuator are set out in claims 2-7.

Embodiments of the invention will now be described, by way of example, with reference to the accompanying drawings, in which:
Fig. 1 is a side view of an embodiment of the invention with certain components removed to reveal the underlying structure;
Fig. 2 (a) is a diagram showing the principle of operation of the drive mechanism of the second embodiment;
Fig. 2 (b) is a perspective view of part of the drive mechanism;
Fig. 3 is an external perspective view of the drive housing of Fig. 1;
Fig. 4 is a perspective view of the inside of one half of the drive housing, the other half being a mirror image of that shown;
Fig. 5 is a perspective view of one of the linked elements of the embodiment of Fig. 1;
Fig. 6 is a perspective view of the rotatable input guide of the embodiment of Fig. 1; and
Figs. 7 (a) to 7 (c) show the actuator of Fig. 1 with the input guide set at various angles.
Fig. 8 is a side view of a second embodiment of the invention with certain components removed to reveal the underlying structure;

In the following description the use of expressions of orientation such as top, bottom, vertical, etc., refer to the orientation of the embodiments as seen in drawings and do not constrain their orientation in use.

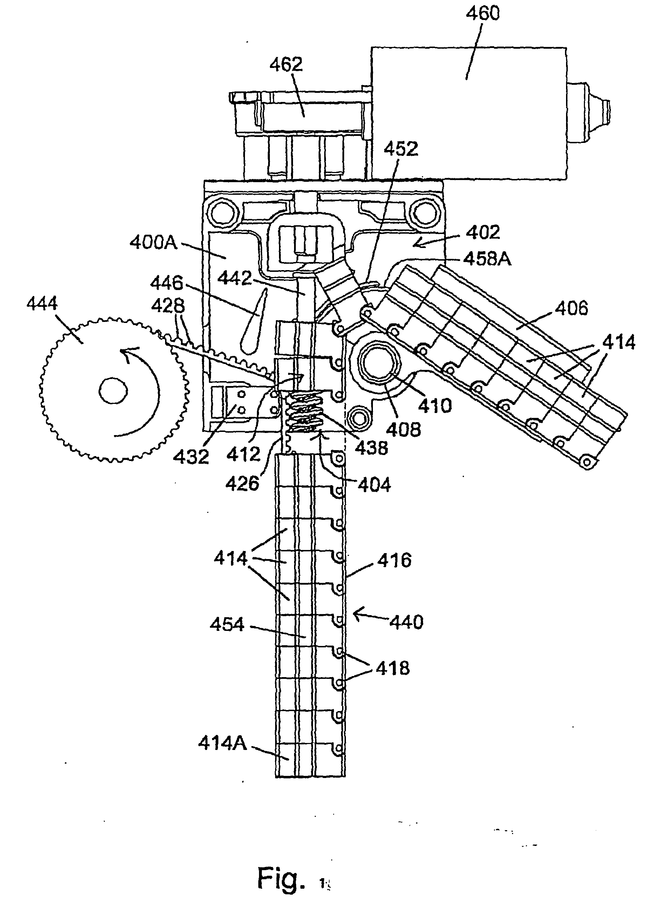

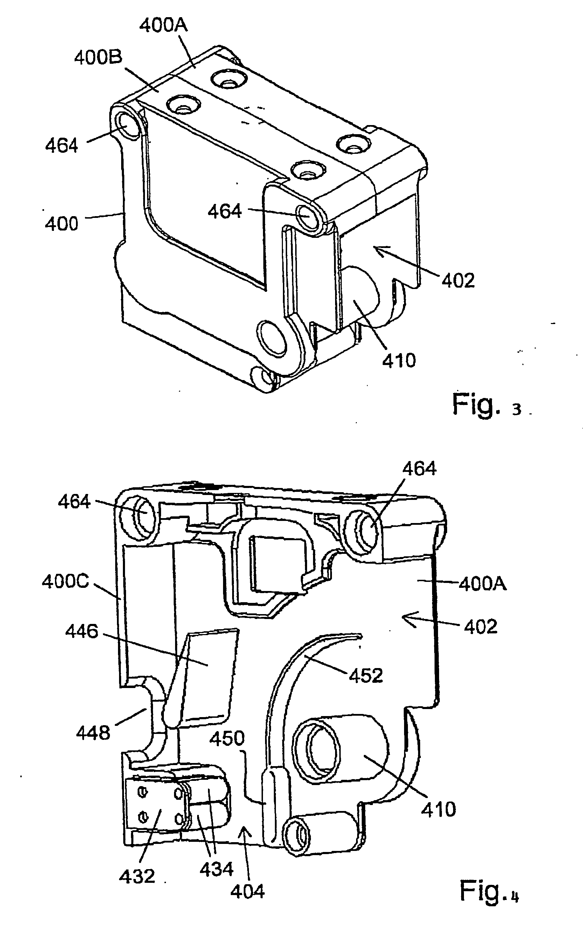

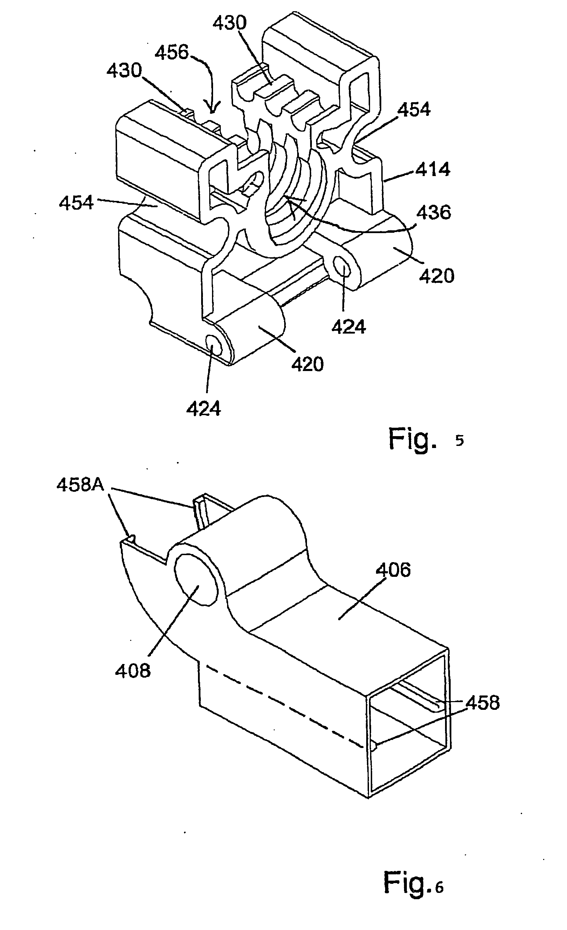

An embodiment of the invention is shown in Figs. 1 to 7. This embodiment comprises a drive housing 400 (Figs. 1, 3 and 4) which comprises two opposite halves 400A, 400B of which the inside structure of the housing. half 400A is shown in Fig. 4. The housing half 400B is a mirror image of the housing half 400A, and the two halves are secured together along their edges 400C (Fig. 4) to form the complete housing seen in Fig. 3. The drive housing 400 has an entrance 402 on one side and an exit 404 at the bottom. The drive housing 400 may be moulded from aluminium or plastics material, or cast in steel, according to its dimensions and the intended loading.

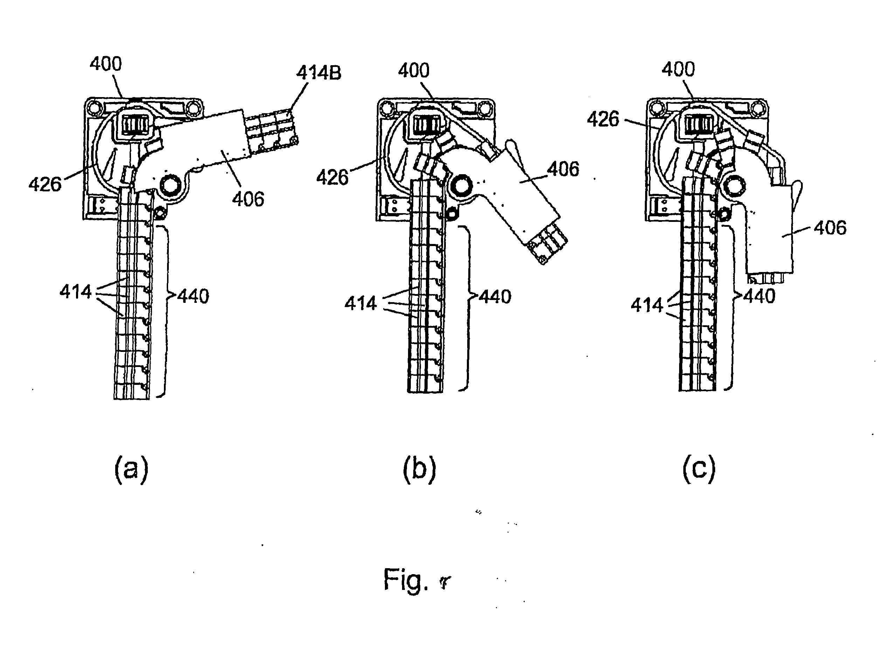

A hollow, tunnel-like input guide 406 (Figs. 1 and 6) is mounted at the drive housing entrance 302. In particular, the guide 406 has a transverse cylindrical bore 408 which is engaged by a hollow cylindrical shaft 410 extending between the opposite major walls of the drive housing 400 to allow rotation of the entire guide 406 about the axis of the shaft 410 (Fig. 7). The housing 400 contains a drive means 412 to be described later.

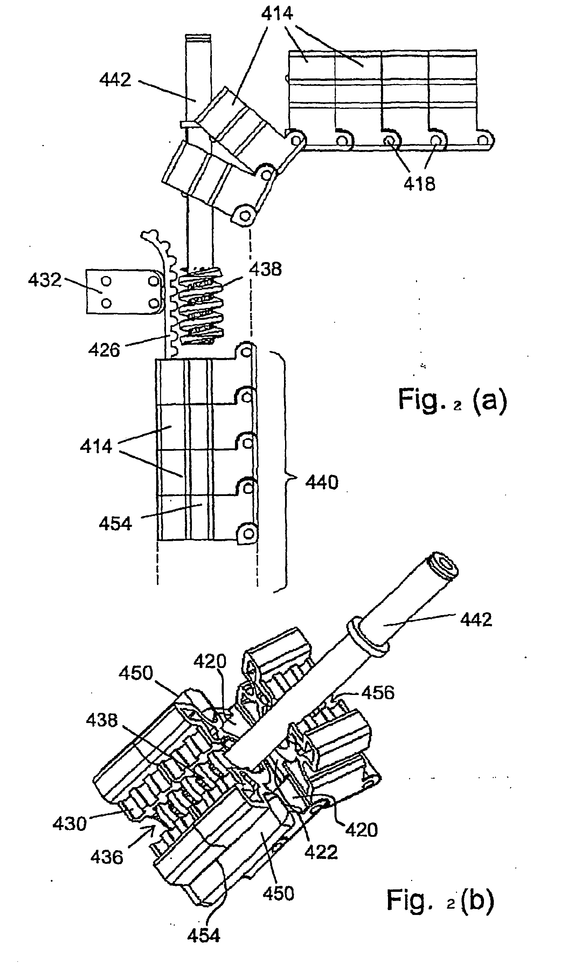

A series of similar rigid hollow elements 414, moulded from plastics material, are connected to one another along one edge 416 of the series of elements for rotation about substantially parallel axes 418. To this end the front of each element 414 has a short pair of arms 420 which embrace a flange 422, Fig. 2 (b), on the rear of the preceding element, the arms and flange having aligned holes 424 through which passes a steel pivot pin (not shown). These pivot pins allow each element 414 to rotate relative to the next element such that the elements may assume a linearly aligned configuration wherein each element is in registering engagement with the next across its full width, as seen for the elements at the top right and bottom of Fig. 1, or may separate from its neighbours at its outer edges to allow the elements to change direction through the housing 400 as will be described. It will be understood that certain components are omitted from Fig.1, for example the housing half 400B and some of the elements 414, in order to show the structure more clearly.

The pivotally connected series of elements 414 are accommodated in the drive housing 400 such that one end of the series is located within the input guide 406 and the other end of the series is outside the housing 400, projecting beyond the exit 404. Between these two ends the series of elements 414 curves through a variable angle dependent on the angular position of the input guide 406.

In order to maintain the elements 414 which project beyond the exit 404 linearly aligned in a substantially rigid self-supporting column 440, a flexible, substantially inelastic toothed belt 426 is provided. This may be made of the same material as is used for timing belts in motor vehicles. The belt 426 is fixed by staking or welding to the end element 414A and its teeth 428 engage corresponding teeth 430 - Figs. 2 (b) and 5 - recessed into the edges of the elements 414 along the opposite edges of the elements to the pivots 418. The belt 426 is maintained in engagement with the elements 414 throughout the length of the projecting column by a roller assembly 432 mounted in the housing 400 and which comprises two rollers 434 (Fig. 2) which press the belt 426 into proper engagement with the elements 414. The engagement of the belt teeth 428 with the element teeth 430 all along the length of the projecting column of elements prevents these from pivoting relative to one another and maintains them tight up against one another.

Each element 414 has a helically-threaded bore 436 whose axis, when the element is in linear alignment with other such elements in the projecting column 440, is coaxial with the other such bores in the column 440 to form a continuous helical thread along the centre of the column. The drive means 412 comprises a worm gear 438 disposed at the free end of a drive shaft 442 whose rotational axis is coaxial with that of the bores in the column 440. The worm gear 438 meshes with at least one element 414 in the column 440 at any one time such that rotation of the worm gear progressively drives the elements out of the housing 400, or draws them into the housing 400, thereby increasing or decreasing the length of the column 440, according to the direction of rotation of the worm gear.

The belt 426, which passes out of the drive housing 400 through a hole 448 (Fig. 4), is accommodated on a take-up spool 444 which is biased by a coil spring (not shown) for rotation in a direction which maintains the belt 426 under slight tension and tends to wind the belt on the spool, as indicated by the arrow in Fig. 1. As the projecting column 440 increases in length the belt 426 is pressed by the roller assembly 432 progressively into engagement with consecutive elements 414 as they emerge from the housing exit 404, against the bias of the coil spring. When the column 440 is decreasing in length the belt 426 progressively disengages the elements 414 and is wound onto the spool 444 by the coil spring. A fin-like element 446 in the housing 400 ensures that the belt 426 separates cleanly from the elements 414.

Within the housing 400 the elements 414 follow a non-linear path between the entrance 402 to the exit 404. This path is defined by a first, straight guide rail 450 near the exit 404 which is contiguous with a second, part-circular guide rail 452 whose centre of curvature is coaxial with the shaft 410 (it will be understood that due to the mirror image construction of the housing halves 400A and 400B the guide rails 450, 452 shown in Fig. 5 are duplicated on the inside surface of the opposite housing half so as to form a pair of guide rails in each case). Each element has a groove 454 along each opposite side and these are engaged in the housing 400 by the guide rails 450 and 452 to direct the element along the desired path between the entrance 402 and exit 404. The pair of straight guide rails 450 resists the turning torque produced on the element 414 by the worm gear 438 so as to keep each element 414 straight as the belt 426 engages or disengages.

To allow each element 414 to join or leave the column 440 by rotation relative to the next element as it follows the pair of curved guide rails 452, each element 414 has a side opening 456 for passage of the drive shaft 442, see especially Fig. 2 (b). The width of the opening 456 is preferably such as to leave at least 80% of the circumference of the threaded bore 436.

The input guide 406 also has a pair of guide rails 458 extending continuously through the length of the guide. In the main body of the guide 406 the guide rails are straight, as indicated by the dashed line in Fig. 6, but the portions 458A at the front of the guide are part-circular and concentric with the axis of the shaft 410. The radius of the portions 458A is slightly less than that of the guides 452 so that the latter ride over the former as seen Fig. 1, the degree of overlap depending. on the angle of the input guide 406 relative to the drive housing 400. Thus the pairs of guides 450, 452 and 458 form a continuous guide for the elements 414 from the drive housing exit 404 to the rear end of the input guide 406.

In Fig. 1 the shaft 442 is shown being driven by an electric motor 460 via a gearbox 462, but any other suitable arrangement may be used. For example, the shaft 442 may be driven by a belt.

As mentioned previously, the input guide 406 is rotatable relative to the drive housing 400 to permit the angle of the input guide to be varied relative to the column 440. In this embodiment the angle can be varied between about 60 and 180 degrees, as seen in Fig. 7. Fig. 7 also shows a variation of the embodiment shown in Fig. 1 where the toothed belt 426 is not attached to a take-up spool but is instead fed round loosely in the drive housing 400 to re-engage the elements 414 where emerge from the input guide 406 into the housing. From that point the belt extends along and in engagement with all the elements 414 in the guide 406 and beyond the free end of the guide 406 to the end element 414B, Fig. 7 (a), to which the belt is fixed. This ensures that the elements are maintained in linear alignment prior to entering the guide 406.

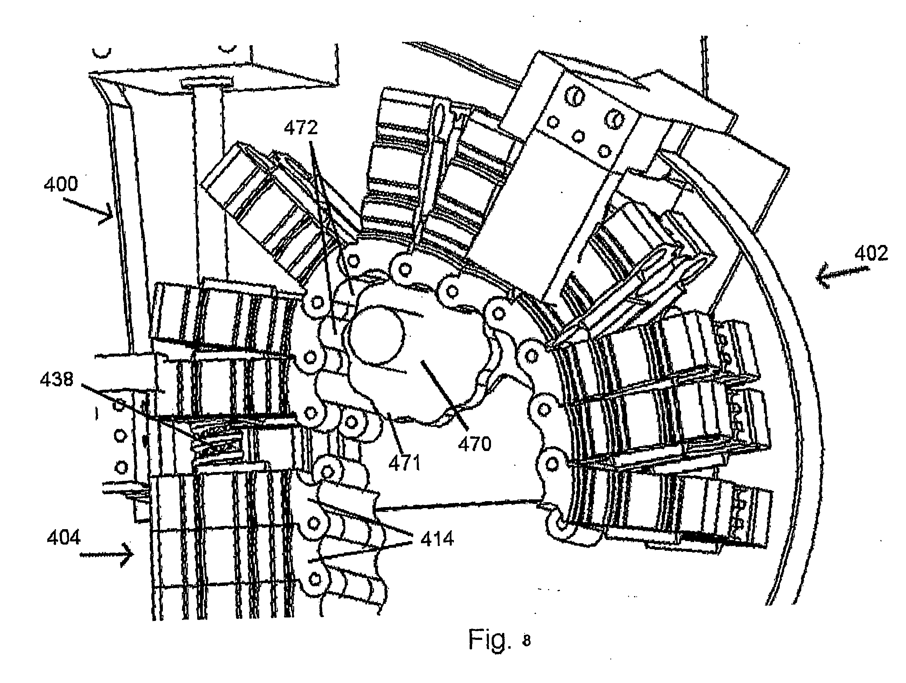

A second embodiment of the invention is shown in Fig. 8. This embodiment comprises a sprocket wheel 470 with rounded teeth 471 positioned in the housing 400, coaxial with the shaft 410 (not shown). The teeth 471 of the sprocket wheel engage with curved edge sections 472 of the elements 414. the sprocket wheel 470 is thus indirectly driven by the worm gear 438 via the elements 414. The sprocket wheel acts to help reduce the friction between the elements 414 and the guide rails in the housing and and the input guide (not shown), by imparting a guiding force to the elements as they are rotated through the angle between the entrance 402 and the exit 404. The guide rails ensure that contact is maintained between the sprocket wheel and the elements, while the elements are being rotated. With the sprocket wheel, any back pressure on the elements due to friction between the elements and the guide rails is alleviated, and the elements move more freely.

In one embodiment, the elements 414 could follow a helical path within the drive housing 400, up to the point where they emerge from the exit 404.

In a further variation of the embodiment shown in Fig. 1 the belt 426 can be omitted entirely. In that case the elements 414 can be manually secured to one another as they emerge from the housing exit 404. For example, along their edges opposite the edge 416 (Fig. 1) the elements could have cooperating formations, not shown, similar to the arms 420 and flanges 422 shown in Fig. 2 (b). Then, as each element 414 emerges from the housing exit 404 and lines up with the preceding element the flange on one element would come to lie between the arms of the other element and a pin could be manually inserted into the aligned holes in these components thus locking them together face-to-face. Similarly, upon withdrawal of the elements into the housing, the pins could be removed one by one. It is also possible to devise a mechanism whereby the pins are inserted and removed automatically.

## Claims

1. An actuator comprising a series of elements (414) each rotatable relative to the next, a housing (400) accommodating at least part of the series of elements (414) with one end of the series projecting freely beyond an exit (404) of the housing (400), the elements (414) being guided to follow a non-linear path to the exit (404), drive means (438) for driving the series of elements (414) relative to the housing (400) to vary the total length of elements (414) projecting beyond the exit (404), and means (426) for maintaining the projecting elements (414) in linear alignment in a substantially rigid, column (440), **characterised in that** the elements (414) are hollow and the drive means includes at least one gear wheel (438) located inside the elements (414) as they pass through the housing (400) and which drivingly engages an inside surface (436) of the elements, the elements having an opening (456) on one side which allows passage of a support means (412) for the gear wheel (438).

2. An actuator as claimed in claim 1, wherein the maintaining means comprises a flexible substantially inelastic toothed belt (426) which is brought progressively into positive engagement with the elements (414) as they rotate into alignment with the column (440).

3. An actuator as claimed in claim 2, wherein the elements (414) are pivotally coupled each to the next along one edge of the series of elements and the belt (426) is brought into engagement with the elements (414) along the opposite edge.

4. An actuator as claimed in claim 1, wherein each element (414) has a helically-threaded bore (436) whose axis, when the element (414) is in the linearly aligned column (440), is coaxial with other such bores (436) in the column (440) to form a continuous helical thread along the column (440) to form a continuous helical thread along the column (440), and wherein the gear wheel comprises a worm gear (438) disposed at the free end of a drive shaft (442) whose rotational axis is coaxial with that of the bores (436) in the column (440), the worm gear (438) meshing with at least one element (414) in the column (440) at any one time such that rotation of the worm gear (438) increases or decreases the length of the column (440) according to the direction of rotation of the worm gear (438), each element (414) having a side opening (436) for passage of the drive shaft (442) to allow each element (414) to join or leave the column (440) by rotation relative to the next element (414).

5. An actuator as claimed in any preceding claim, wherein the series of elements (414) enters the housing (400) through an input guide (406) which is rotatable relative to the housing (400) over a range of angles relative to the linearly aligned column (440).

6. An actuator as claimed in claim 5 when directly or indirectly dependent on claim 2, wherein the elements (414) are engaged by the belt (426) in the input guide (406) whereby the elements (414) are maintained in linear alignment prior to entered the guide (400).

7. An actuator as claimed in any preceding claim, wherein the actuator further comprises a sprocket wheel (470) which engages with and guides the elements (414).

8. A device for moving a load comprising a base portion and a load bearing portion and means for moving the load bearing portion, **characterised in that** the means for moving the load bearing portion comprises an actuator according to any preceding claim.

## Patentansprüche

1. Antrieb, der Folgendes umfasst: eine Reihe von Elementen (414), die jeweils im Verhältnis zum nächsten drehbar sind, ein Gehäuse (400), das wenigstens einen Teil der Reihe von Elementen (414) aufnimmt, wobei ein Ende der Reihe frei über einen Ausgang (404) des Gehäuses (400) hinaus vorspringt, wobei die Elemente (414) geführt werden, um einer nicht linearen Bahn zum Ausgang (404) zu folgen, Antriebsmittel (438), um die Reihe von Elementen (414) im Verhältnis zum Gehäuse (400) anzutreiben, um die Gesamtlänge der Elemente (414), die über den Ausgang (404) vorspringt, zu verändern, und Mittel (426), um die vorspringenden Elemente (414) in einer linearen Ausrichtung in einer im Wesentlichen starren Säule (440) zu halten, **dadurch gekennzeichnet, dass** die Elemente (414) hohl sind und das Antriebsmittel wenigstens ein Zahnrad (438) einschließt, dass innerhalb der Elemente (414) angeordnet ist, wenn sie durch das Gehäuse (400) hindurchgehen, und das eine Innenfläche (436) der Elemente antreibend in Eingriff nimmt, wobei die Elemente auf einer Seite eine Öffnung (456) haben, die den Durchgang eines Stützmittels (412) für das Zahnrad (438) ermöglicht.

2. Antrieb nach Anspruch 1, wobei das Haltemittel einen flexiblen, im Wesentlichen nicht elastischen Zahnriemen (426) umfasst, der fortschreitend in formschlüssigen Eingriff mit den Elementen (414) gebracht wird, wenn sie sich in eine Ausrichtung mit der Säule (440) drehen.

3. Antrieb nach Anspruch 2, wobei die Elemente (414) längs einer Kante der Reihe von Elementen jeweils schwenkbar an das nächste gekoppelt sind und der Riemen (426) längs der gegenüberliegenden Kante in Eingriff mit den Elementen (414) gebracht wird.

4. Antrieb nach Anspruch 1, wobei jedes Element (414) eine Spiralgewindebohrung (436) hat, deren Achse, wenn sich das Element (414) in der linear ausgerichteten Säule (440) befindet, koaxial mit anderen solchen Bohrungen (436) in der Säule (440) ist, um längs der Säule (440) ein durchgehendes Spiralgewinde zu bilden, und wobei das Zahnrad ein Schneckenrad (438) umfasst, das am freien Ende einer Antriebswelle (442) angeordnet ist, deren Drehachse koaxial mit derjenigen der Bohrungen (436) in der Säule (440) ist, wobei das Schneckenrad (438) zu jeder Zeit mit wenigstens einem Element (414) in der Säule (440) ineinandergreift derart, dass die Drehung des Schneckenrades (438) die Länge der Säule (440) entsprechend der Drehrichtung des Schneckenrades (438) steigert oder vermindert, wobei jedes Element (414) eine Seitenöffnung (436) für einen Durchgang der Antriebswelle (442) hat, um zu ermöglichen, dass sich jedes Element (414) durch eine Drehung im Verhältnis zum nächsten Element (414) der Säule (440) anschließt oder von derselben löst.

5. Antrieb nach einem der vorhergehenden Ansprüche, wobei die Reihe von Elementen (414) durch eine Eingangsführung (406), die im Verhältnis zum Gehäuse (400) über einen Bereich von Winkeln im Verhältnis zur linear ausgerichteten Säule (440) drehbar ist, in das Gehäuse (400) eintritt.

6. Antrieb nach Anspruch 5, wenn unmittelbar oder mittelbar abhängig von Anspruch 2, wobei die Elemente (414) in der Eingangsführung (406) durch den Riemen (426) in Eingriff genommen werden, wodurch die Elemente (414) vor dem Eintreten in das Gehäuse (400) in einer linearen Ausrichtung gehalten werden.

7. Antrieb nach einem der vorhergehenden Ansprüche, wobei der Antrieb ferner ein Kettenrad (470) umfasst, das mit den Elementen (414) ineinandergreift und dieselben führt.

8. Vorrichtung zum Bewegen einer Last, die einen Basisabschnitt und einen Last tragenden Abschnitt und Mittel zum Bewegen des Last tragenden Abschnitts umfasst, **dadurch gekennzeichnet, dass** das Mittel zum Bewegen des Last tragenden Abschnitts einen Antrieb nach einem der vorhergehenden Ansprüche umfasst.

## Revendications

1. Dispositif d'actionnement, comprenant une série d'éléments (414), chacun pouvant tourner par rapport au suivant, un boîtier (400) recevant au moins une partie de la série d'éléments (414), une extrémité de la série débordant librement au-delà d'une ouverture (404) du boîtier (400), les éléments (414) étant guidés de sorte à suivre une trajectoire non linéaire vers la sortie (404), un moyen d'entraînement (438) pour entraîner la série d'éléments (414) par rapport au boîtier (400) pour varier la longueur totale des éléments (414) débordant au-delà de la sortie (404), et un moyen (426) pour retenir les éléments en saillie (414) en alignement linéaire dans une colonne pratiquement rigide (440), **caractérisé en ce que** les éléments (414) sont creux et **en ce que** le moyen d'entraînement englobe au moins une roue d'engrenage (438) agencée à l'intérieur des éléments (414) lors de leur passage à travers le boîtier (400) et s'engeant par entraînement dans une surface interne (436) des éléments, les éléments comportant une ouverture (456) sur un côté, permettant le passage d'un moyen de support (412) pour la roue d'engrenage (438).

2. Dispositif d'actionnement selon la revendication 1, dans lequel le moyen de retenue comprend une courroie dentée flexible pratiquement non élastique (426) engagée progressivement de manière positive dans les éléments (414) lors de leur rotation en alignement avec la colonne (440).

3. Dispositif d'actionnement selon la revendication 2, dans lequel les éléments (414) sont chacun accouplés de manière pivotante à l'élément suivant le long d'un bord de la série d'éléments, la courroie (426) étant engagée dans les éléments (414) le long du bord opposé.

4. Dispositif d'actionnement selon la revendication 1, dans lequel chaque élément (414) comporte un alésage à filetage hélicoïdal (436) dont l'axe est coaxial à d'autres alésages de ce type (436) dans la colonne (440) lorsque l'élément (414) est aligné de manière linéaire dans la colonne (440), pour former un filetage hélicoïdal continu le long de la colonne (440), la roue d'engrenage comprenant une vis sans fin (438) agencée au niveau de l'extrémité libre d'un arbre d'entraînement (442) dont l'axe de rotation est coaxial à celui des alésages (436) dans la colonne (440), la vis sans fin (438) s'engrenant à tout moment dans au moins un élément (414) dans la colonne (440), de sorte que la rotation de la vis sans fin (438) accroît ou réduit la longueur de la colonne (440) en fonction de la direction de rotation de la vis sans fin (438), chaque élément (414) comportant une ouverture latérale (436) pour le passage de l'arbre d'entraînement (442), pour permettre à chaque élément (414) de rejoindre la colonne (440) ou de quitter celle-ci par suite d'une rotation par rapport à l'élément suivant (414).

5. Dispositif d'actionnement selon l'une quelconque des revendications précédentes, dans lequel la série d'éléments (414) rentre dans le boîtier (400) à travers un guide d'entrée (406) pouvant tourner par rapport au boîtier (400) à travers un intervalle d'angles par rapport à la colonne à alignement linéaire (440).

6. Dispositif d'actionnement selon la revendication 5, dépendant directement ou indirectement de la revendication 2, dans lequel les éléments (414) sont engagés dans la courroie (426) dans le guide d'entrée (406), les éléments (414) étant ainsi retenus dans un alignement linéaire avant d'entrer dans le boîtier (400).

7. Dispositif d'actionnement selon l'une quelconque des revendications précédentes, dans lequel le dispositif d'actionnement comprend en outre une roue dentée (470) s'engageant dans les éléments (414) et guidant ceux-ci.

8. Dispositif destiné à déplacer une charge, comprenant une partie de base et une partie de support de charge, et un moyen pour déplacer la partie de support de charge, **caractérisé en ce que** le moyen destiné à déplacer la partie de support de charge comprend un dispositif d'actionnement selon l'une quelconque des revendications précédentes.
